# EUROPEAN PATENT APPLICATION

(11) **EP 3 431 275 A1**
(43) Date of publication of application: **23.01.2019**
(21) Application number: 17181820.6
(22) Date of filing: 18.07.2017
(51) Int. Cl.: B29D 11/00

(54) **METHOD FOR FABRICATING HIGH SAG LENS ARRAY AND HIGH SAG LENS ARRAY**

(71) Applicant: Himax Technologies Limited, Tainan City 74148 (TW)
(72) Inventor: HUANG, Teng-Te, 74148 Tainan City (TW); LAI, Jen-Hui, 74148 Tainan City (TW); HSU, Shu-Hao, 74148 Tainan City (TW)
(74) Representative: Hoefer & Partner Patentanwälte mbB

(57) **Abstract**

A method for fabricating a high sag lens array (100) a high sag lens array (100) fabricated by a semiconductor process. The method comprises: individually jetting an optical glue material into a plurality of lens mold cavities (104) of a mold (102) to form a plurality of lens parts (106) independently; exposing the lens parts (106) to harden the optical glue material in the lens mold cavities (104); jetting an optical glue layer (108) on the lens parts (106); forming a transparent substrate (110) on the optical glue layer (108); exposing the optical glue layer (108) to harden the optical glue layer (108) and combine the transparent substrate (110), the optical glue layer (108), and the lens parts (106); and removing the mold (102) to form the high sag lens array (100).

## Description

The present invention relates to a method for fabricating a high sag lens array and a high sag lens array according to the pre-characterizing clauses of claims 1 and 6.

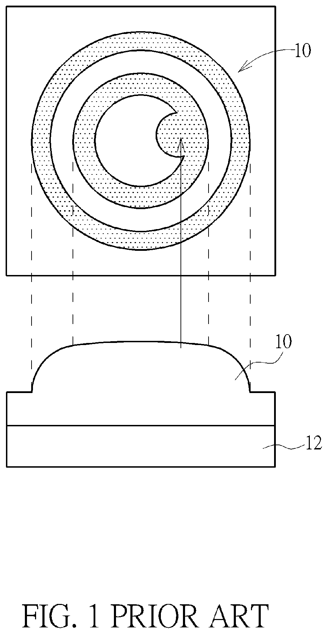

In general, a conventional method of fabricating a micro-lens array firstly injects an ultraviolet (UV) glue layer on a mold with a plurality of cavities, and then positions a glass substrate on the UV glue layer, and irradiates an UV ray while the glass substrate presses the UV glue layer to harden the UV glue layer and combine the glass substrate and the UV glue layer to fabricate the micro-lens array. However, when the cavities have a depth of over 300 micrometers, this method will cause unfilled forming or bubble in the UV glue layer in the cavities, and the incompletely forming process and the bubble issue would cause poor optical characteristics. In other words, when using the conventional method to fabricate a micro-lens array with a height of over 300 micrometers, there will be a deformation or a bubble issue on the top area of each micro-lens of the micro-lens array. Please refer to FIG. 1. FIG. 1 is a diagram showing a micro-lens 10 on a glass substrate 12 and a top view of the micro-lens 10 in the micro-lens array fabricated by the conventional method. As shown in FIG. 1, the micro-lens 10 has a serious bubble issue on the top area of the micro-lens 10.

This in mind, the present invention aims at providing a method for fabricating a high sag lens array and a high sag lens array fabricated by a semiconductor process.

This is achieved by a method for fabricating a high sag lens array and a high sag lens array according to the independent claims 1 and 6. The respective dependent claims pertain to corresponding further developments and improvements.

As will be seen more clearly from the detailed description following below, one claimed method comprises: individually jetting an optical glue material into a plurality of lens mold cavities of a mold to form a plurality of lens parts independently; exposing the lens parts to harden the optical glue material in the lens mold cavities; jetting an optical glue layer on the lens parts; forming a transparent substrate on the optical glue layer; exposing the optical glue layer to harden the optical glue layer and combine the transparent substrate, the optical glue layer, and the lens parts; and removing the mold to form the high sag lens array.

As will be seen more clearly from the detailed description following below, one claimed high sag lens array comprises: a glass substrate, an optical glue layer, and a plurality of lens parts. The optical glue layer is formed on the glass substrate. The lens parts are formed on the optical glue layer and have a height of over 300 micrometers.

In the following, the invention is further illustrated by way of example, taking reference to the accompanying drawings. Thereof
FIG. 1 is a diagram showing a micro-lens on a glass substrate and a top view of the micro-lens in the micro-lens array fabricated by the conventional method.
FIGS. 2-6 are sectional diagrams illustrating sequential procedures of fabricating a high sag lens array according to an embodiment of the present invention.
FIG. 7 is a diagram showing a top view of one lens part in the high sag lens array according to an embodiment of the present invention.
FIG. 8 is a flowchart of a method for fabricating a high sag lens array according to an embodiment of the present invention.

Certain terms are used throughout the following description and the claims to refer to particular system components. As one skilled in the art will appreciate, manufacturers may refer to a component by different names. This document does not intend to distinguish between components that differ in name but not function. In the following discussion and in the claims, the terms "include", "including", "comprise", and "comprising" are used in an open-ended fashion, and thus should be interpreted to mean "including, but not limited to ...". The terms "couple" and "coupled" are intended to mean either an indirect or a direct electrical connection. Thus, if a first device couples to a second device, that connection may be through a direct electrical connection, or through an indirect electrical connection via other devices and connections.

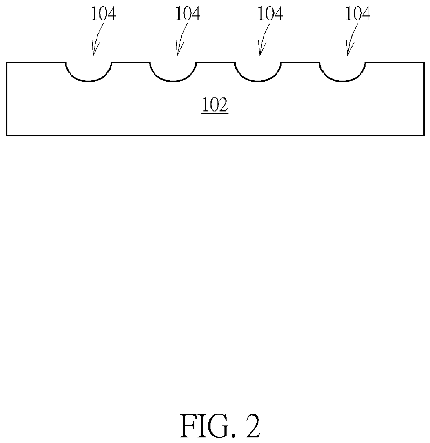

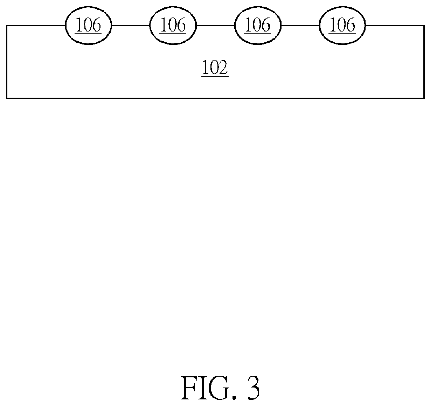

Please refer to FIGS. 2-6. FIGS. 2-6 are sectional diagrams illustrating sequential procedures of fabricating a high sag lens array 100 according to an embodiment of the present invention, wherein the high sag lens array 100 can be a micro-lens array utilized in a semiconductor chip. As shown in FIG. 2, a mold 102 having a plurality of lens mold cavities 104 is formed, wherein the lens mold cavities can have a depth of over 300 micrometers. As shown in FIG. 3, an optical glue material is individually jetted into the lens mold cavities 104 of the mold 102 to form a plurality of lens parts 106 independently, wherein the optical glue material can be an ultraviolet (UV) glue material. For example, the present invention can jet the optical glue material one by one into the lens mold cavities 104, or two by two into the lens mold cavities 104, or a batch by a batch into the lens mold cavities 104. Next, the lens parts 106 are exposed to harden the optical glue material in the lens mold cavities 104. For example, the present invention can irradiate an UV ray to the lens parts 106 to harden the optical glue material in the lens mold cavities 104.

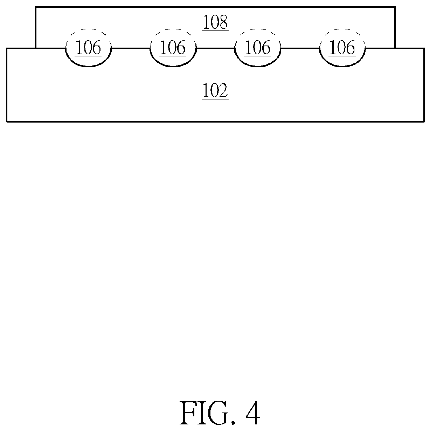

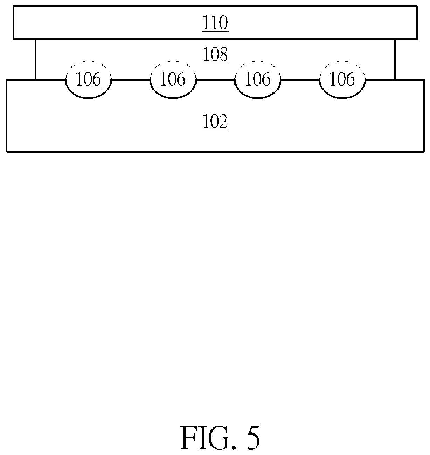

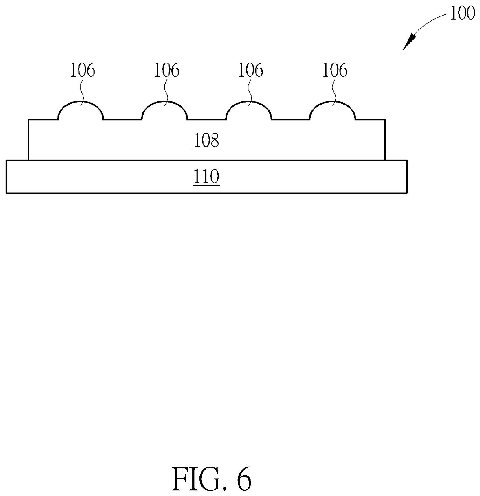

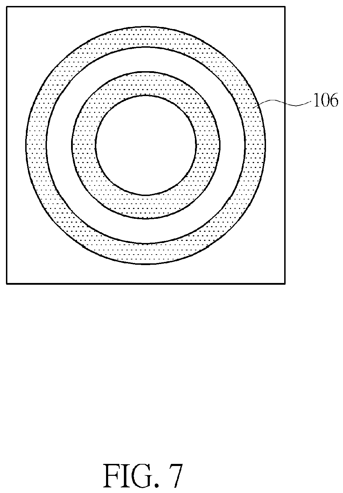

As shown in FIG. 4, an optical glue layer 108 jetted on the lens parts 160 wherein the optical glue layer can comprise a UV glue material same as the optical glue material in the lens mold cavities 104. As shown in FIG. 5, a transparent substrate 110 is formed on the optical glue layer 108, and the optical glue layer 108 is exposed to be hardened so as to combine the transparent substrate 110, the optical glue layer 108, and the lens parts 106, wherein the transparent substrate 110 can be a glass substrate. As shown in FIG. 6, the mold 102 is removed to form the high sag lens array 100, wherein the high sag lens array 100 has a height of over 300 micrometers. In this way, the present invention can use a semiconductor process to fabricate the high sag lens array 100 having a good formation without the bubble issue. Please refer to FIG. 7. FIG. 7 is a diagram showing a top view of one lens part 106 in the high sag lens array 100. Please note that the embodiment is merely for an illustrative purpose and is not meant to be a limitation of the present invention. For example, the number of the lens mold cavities 104 and the lens parts 106 can be changed according to different design requirements.

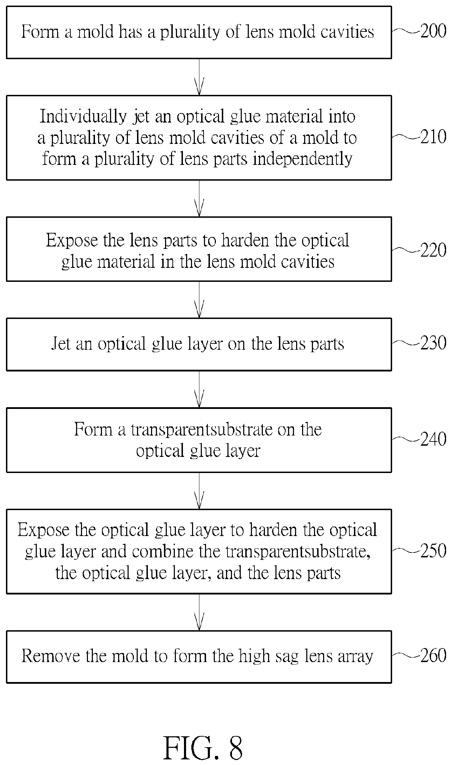

Please refer to FIG. 8. FIG. 8 is a flowchart of a method for fabricating a high sag lens array according to an embodiment of the present invention. Provided that substantially the same result is achieved, the steps of the process flowchart do not have to be in the exact order shown in FIG. 8 and need not be contiguous, meaning that other steps can be intermediate. The method comprises the following steps:
Step 200: Form a mold has a plurality of lens mold cavities.
Step 210: Individually jet an optical glue material into a plurality of lens mold cavities of a mold to form a plurality of lens parts independently.
Step 220: Expose the lens parts to harden the optical glue material in the lens mold cavities.
Step 230: Jet an optical glue layer on the lens parts.
Step 240: Form a transparent substrate on the optical glue layer.
Step 250: Expose the optical glue layer to harden the optical glue layer and combine the transparent substrate, the optical glue layer, and the lens parts
Step 260: Remove the mold to form the high sag lens array.

Briefly summarized, the present invention can use a semiconductor process to fabricate a high sag lens array with a height of over 300 micrometers, each lens in the high sag lens array has a good formation without the bubble issue.

## Claims

1. A method for fabricating a high sag lens array (100), comprising:
individually jetting an optical glue material into a plurality of lens mold cavities (104) of a mold (102) to form a plurality of lens parts (106) independently;
exposing the lens parts (106) to harden the optical glue material in the lens mold cavities (104);
jetting an optical glue layer (108) on the lens parts (106);
forming a transparent substrate (110) on the optical glue layer (108);
exposing the optical glue layer (108) to harden the optical glue layer (108) and combine the transparent substrate (110), the optical glue layer (108), and the lens parts (106); and
removing the mold (102) to form the high sag lens array (100).

2. The method of claim 1, wherein the lens mold cavities (104) have a depth of over 300 micrometers.

3. The method of claim 1, wherein the optical glue material is an ultraviolet (UV) glue material.

4. The method of claim 1, wherein the optical glue layer (108) comprises a UV glue material.

5. The method of claim 1, wherein the transparent substrate (110) is a glass substrate.

6. A high sag lens array (100), comprising:
a transparent substrate (110);
an optical glue layer (108), formed on the glass substrate; and
a plurality of lens parts (106), formed on the optical glue layer (108), having a height of over 300 micrometers.

7. The high sag lens array (100) of claim 6, wherein the optical glue layer (108) comprises a UV glue material.

8. The high sag lens array (100) of claim 6, wherein the lens parts (106) comprise a UV glue material.

9. The high sag lens array (100) of claim 6, wherein the transparent substrate (110) is a glass substrate.

10. The high sag lens array (100) of claim 6, being fabricated by a semiconductor process.
